# EUROPÄISCHE PATENTSCHRIFT

(11) **EP 2 405 048 B1**
(45) Veröffentlichungstag und Bekanntmachung des Hinweises auf die Patenterteilung: **26.09.2012**
(21) Anmeldenummer: 11005126.5
(22) Anmeldetag: 24.06.2011
(51) Int. Cl.: D06C 3/06, B65H 23/025, F16C 13/00

(54) **Streckwalze für dünne bahnförmige Materialien**
Draw roller for thin sheet-like materials
Cylindre d'étirage pour matériaux fins en forme de bande

(30) Priorität: 07.07.2010 DE 102010026370
(43) Veröffentlichungstag der Anmeldung: 11.01.2012
(73) Patentinhaber: Genthe, Karl, 25524 Oelixdorf (DE)
(72) Erfinder: Genthe, Karl, 25524 Oelixdorf (DE)
(74) Vertreter: Hansmann, Dierk

(56) Entgegenhaltungen:
- WO-A1-98/12381
- WO-A1-2005/115894
- DE-A1-102005 044 958
- GB-A- 509 313
- GB-A- 674 253

## Beschreibung

Die Erfindung bezieht sich auf eine Streckwalze für dünne bahnförmige Materialien in Form einer Breitstreckwalze, wie für eine Textil- und Papierbearbeitung, wobei ein Walzenkörper während seiner Drehbewegung eine veränderliche Umlaufbahn als Anlagefläche für eine Materialbahn ausbildet und ein Übergang von einer muldenförmigen in eine erhöhende Anlagefläche ausgehend von der Walzenmitte sich einstellt und der Walzenkörper durch zwei einander zugeordnete konische Walzenelemente gebildet ist sowie die kleineren Durchmesser der konischen Walzenelemente im Mittenbereich einander zugeordnet sind.

Breitstreckwalzen zur faltenfreien Führung von Materialbahnen sind in unterschiedlichen Ausführungen bekannt. Die Schwierigkeiten bestehen darin, dass es sich hierbei um gebogene Walzen mit einer gebogenen Welle handelt, die eine aufwendige seitliche Lagerung erfordern, um eine leichte Mitnahme der Walze durch die Materialbahn zu ermöglichten. Zusätzlich sind diese Anordnungen mit einem Verschleiss unterliegenden Gummimaterial versehen.

Ferner ist nach der DE 20 55 536 B2 eine Streckwalze für Textilbahnen ebenfalls mit einer gebogenen Tragachse bekannt, wobei auf der Tragachse in Abständen Walzlager aufgezogen sind, deren äußeren Lagerringe steife Hülsen tragen, über die ein durchgehender elastischer Mantel gezogen ist und deren inneren Lagerringe auf der gebogenen Tragachse durch Abstandsbuchsen axial federnd gehalten sind. Diese Anordnungen sind relativ aufwendig in der Herstellung und verschleissanfällig, insbesondere wenn sie für einen Nasseinsatz verwendet werden.

Nach der GB 509 313 A ist ebenfalls eine Streckwalze für dünne bahnförmige Materialien als Breitstreckwalze bekannt, wobei ein Walzenkörper während seiner Drehbewegung eine veränderliche Umlaufbahn als Anlagefläche für eine Materialbahn ausbildet und einen Übergang von einer muldenförmigen in eine erhöhende Anlagefläche ausgehend von der Walzenmitte sich einstellt.

Ferner ist nach der WO 98/12381 A1 für eine Ausbildung mit einem gekrümmten Walzenkörper bekannt, wobei eine Lagerung durch jeweils zwei Lager an jeder Seite zwischen einem Zylinderelement und einem Walzenkörper als Mantelröhre angeordnet sind.

Die Aufgabe der Erfindung ist es, eine einfache Breitstreckwalze zu schaffen, die den Einsatz einer geraden Achswelle ermöglicht und einen einfachen Aufbau aufweist sowie eine leichte Mitnahme der Walze durch die Materialbahn gewährleistet.

Die Lösung dieser Aufgabe erfolgt erfindungsgemäss dadurch, dass die Walzenelemente auf einer gemeinsamen zentrischen Achswelle über zugeordnete beiderseitige mit der Achswelle verbundene Exzenterbuchsen drehbar zur Bildung einer Mulde und einer Erhöhung ineinander zugeordneten Bereich durch Verdrehung aufweisen.

Hierdurch ist es möglich, auf einfache Weise eine gerade Achswelle mit allen ihren Herstellungsvorteilen einzusetzen und gegebenenfalls auf einen Gummimantel oder dergleichen zu verzichten und eine leichte Mitnahme der Walze durch die Materialbahn zu gewährleisten.

Ferner wird vorgeschlagen, dass die Walzenelemente in ihrem Endbereichen über zwischengeschaltete Kugellager gegenüber der Welle zugeordneten Exzenterbuchsen angeordnet sind, wobei die Exzenterbuchsen über im Winkel angeordnete Bohrungen in Ausrichtung auf die Achswelle aufweisen.

Zur Montageerleichterung ist vorgesehen, dass die innenliegenden Seiten der Exzenterbuchsen der Walzenelemente durch eine Distanzbuchse beabstandet angeordnet sind.

Weiterhin wird für eine einfache Führung und Abdichtung vorgeschlagen, dass die innenliegenden Bereiche der zugeordneten Walzenelemente über ein mit einem Walzenelement verbundenen kalottenförmiges Führungselement einerseits zur Aufnahme des zugeordneten anderen Walzenelementes andererseits und gegebenenfalls unter Zwischenschaltung eines Dichtungselementes angeordnet ist.

In der Zeichnung ist ein Ausführungsbeispiel der Erfindung schematisch dargestellt. Es zeigen:

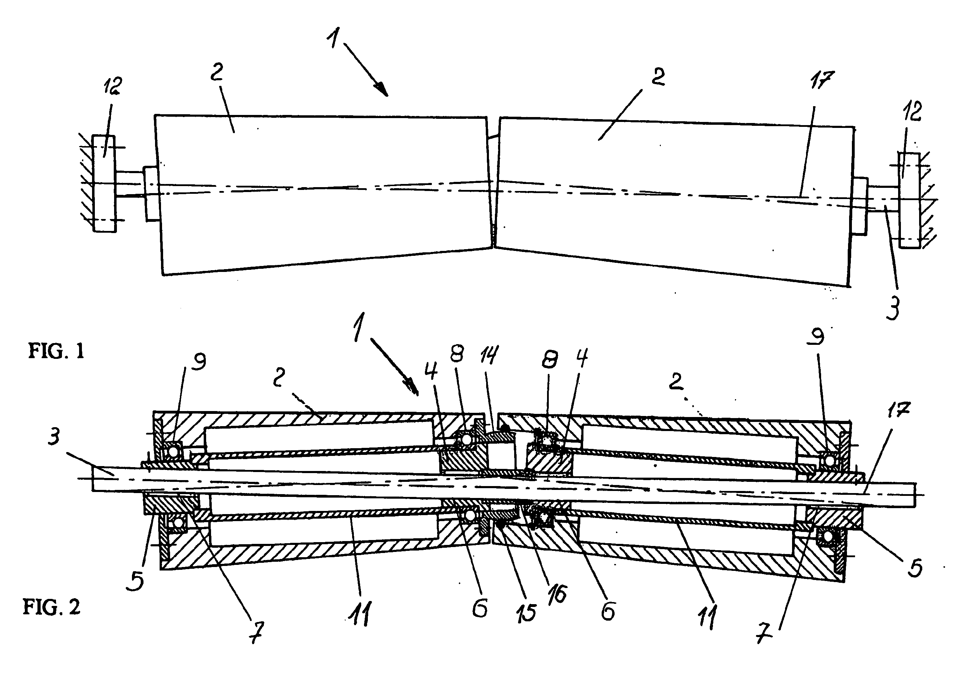

- Fig. 1: eine Seitenansicht einer Streckwalze;
- Fig. 2: eine Schnittdarstellung gemäss Fig. 1;

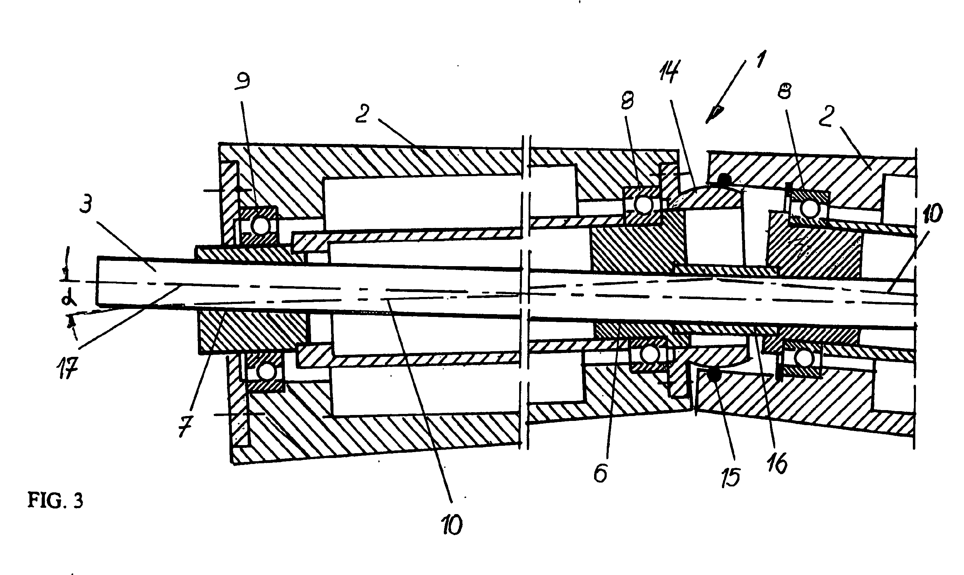

- Fig. 3: eine Schnittdarstellung als vergrösserte Teildarstellung einer Streckwalze;

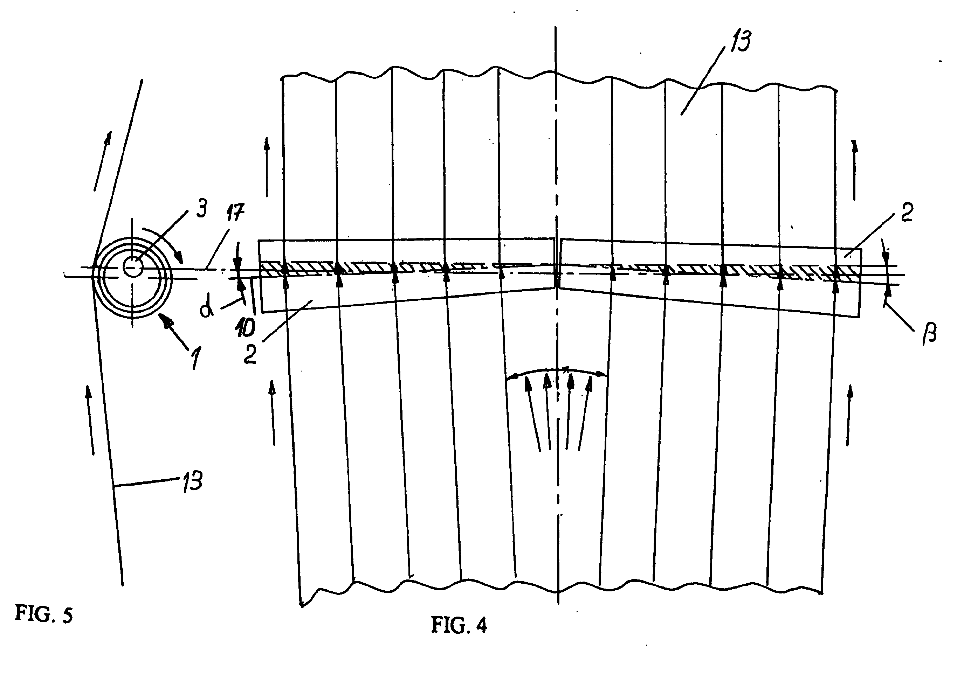

- Fig. 4: eine Streckwalze mit einer zugeordneten Materialbahn und
- Fig. 5: eine Seitenansicht gemäss Fig. 4

Bei der gezeigten Anordnung wird ein drehbarer Walzenkörper 1 durch zwei konische Walzenelemente 2 gebildet, wobei die kleinen Durchmesser jedes Konusses der Walzenelemente 2 im Mittenbereich einander zugeordnet sind. Hierbei sind die konischen Walzenelemente 2 auf einer zentralen Achswelle 3 drehbar angeordnet. Die Achswelle 3 ist dabei mittels einer außenliegenden Lagerung 12 bzw. über ein Verstellgetriebe angeordnet. Jedes Walzenelement 2 ist in seinen Endbereichen über auf die Achswelle 3 aufgesetzten und mit diesen verbundenen Exzenterbuchsen 4 und 5 angeordnet ist.

Die Exzenterbuchsen 4 und 5 sind dabei über im Winkel alpha zugeordnete Bohrungen 6, 7 in Ausrichtung auf die Achswelle 3 aufgesetzt und festgelegt. Dabei sind jeweils Kugellager 8, 9 zwischen einem Außenbereich der Exzenterbuchsen 4, 5 und dem Walzenelement 2 angeordnet.

Die Kugellager 8, 9 sind dadurch parallel zur Mittelachse 10 der konischen Walzenelemente 2 und auf einer Ebene angeordnet. Das innenliegende Kugellager 8 ist dabei als Festlager ausgebildet und wird mit einer Distanzhülse 11 durch die äußere Exzenterbuchse 5 fixiert. Das äußere Kugellager 9 dient als Loslager und ist auf der der Exzenterbuchse 5 verschiebbar.

Durch diese Anordnung ergibt sich bei einer geraden Achswelle 3 und der aufgenommenen konischen Walzenelemente 2 über die Exzenterbuchsen 4, 5 eine Abwinklung alpha zur Mitte des Walzenkörpers 1 in Form einer Abknickung, so dass sich hierdurch jeweils von der Mitte beidseitig nach aussen durch eine Abrollbewegung einer anliegenden Warenbahn 13 Breitstreckkräfte entwickeln. Hierbei ist zu berücksichtigen, dass die Walzenelemente 2 eine konische Ausbildung aufweisen und sich die Durchmesser jeweils von der Mitte ausgehend beidseitig vergrößern und damit sich auch die einstellenden Breitstreckkräfte auf die Warenbahn 13 über einen Winkel beta fortlaufend vergrößern. Bei der anliegenden Warenbahn 13, die über den Walzenkörper 1 geführt wird, werden Bahnfalten somit zwangsläufig jeweils beidseitig von einer Bahnmitte nach außen gestreckt und schlaffe Bahnmitten sowie lose Bahnkanten zugleich gestrafft.

Die beiden zugeordneten konischen Walzenelemente 2 werden in der Mitte durch ein kalottenförmiges Führungselement 14 an einem Walzenelement 2 und einem überlappenden Element mit einer Dichtung 15 am anderen Walzenelement 2 geführt. Hierdurch wird der entstehende Bogenweg beim Verdrehen der zugeordneten Walzenelemente 2 ausgeglichen und gleichzeitig das offene Kugellager 8 des Walzenelementes 2 geschützt.

Zusätzlich ist zwischen den Exzenterbuchsen 4 eine Distanzbuchse 16 angeordnet.

Durch diese Achswelle 3 mit einer geraden Mittelachse 17 ist es möglich, eine leichtläufige Anordnung ohne Antrieb zu schaffen.

## Patentansprüche

1. Streckwalze für dünne bahnförmige Materialien in Form einer Breitstreckwalze, wie für eine Textil - und Papierbearbeitung, wobei ein Walzenkörper (1) während seiner Drehbewegung eine veränderliche Umlaufbahn als Anlagefläche für eine Materialbahn ausbildet und ein Übergang von einer muldenförmigen in eine erhöhende Anlagefläche ausgehend von der Walzenmitte sich einstellt und der Walzenkörper (1) durch zwei einander zugeordnete konische Walzenelemente (2) gebildet ist sowie die kleineren Durchmesser der konischen Walzenelemente (2) im Mittenbereich einander zugeordnet sind, **dadurch gekennzeichnet, dass** die Walzenelemente (2) auf einer gemeinsamen zentrischen Achswelle (3) über zugeordnete beiderseitige mit der Achswelle (3) verbundene Exzenterbuchsen (4, 5) drehbar zur Bildung einer Mulde und einer Erhöhung ineinander zugeordneten Bereich durch Verdrehung aufweisen.

2. Streckwalze nach Anspruch 1, **dadurch gekennzeichnet, dass** die Walzenelemente (2) in ihrem Endbereichen über zwischengeschaltete Kugellager (8, 9) gegenüber der mit der Welle (3) verbundenen Exzenterbuchsen (4, 5) angeordnet sind, wobei die Exzenterbuchsen über im Winkel (alpha) angeordnete Bohrungen (6, 7) in Ausrichtung auf die Achswelle (3) aufweisen.

3. Streckwalze nach Anspruch 1 oder 2, **dadurch gekennzeichnet, dass** die innenliegenden Seiten der Exzenterbuchsen (4, 5) der Walzenelemente (2) durch eine Distanzbuchse (16) beabstandet angeordnet sind.

4. Streckwalze nach einem der Ansprüche 1 bis 3, dass die innenliegenden Bereiche der zugeordneten Walzenelemente (2) über ein mit einem Walzenelement (2) verbundenen kalottenförmiges Führungselement (14) einerseits zur Aufnahme des zugeordneten anderen Walzenelementes (2) andererseits und gegebenenfalls unter Zwischenschaltung eines Dichtungselementes (15) angeordnet ist.

## Claims

1. A draw roller for thin web-shaped materials in the form of an expander roller as used for textile and paper processing, wherein a roller body (1) forms a variable continuous path as a contact surface for a material web during its rotational movement, and transfer from a trough-like contact surface into an elevated contact surface takes place starting from the centre of the roller, and the roller body (1) is formed by two mutually associated conical roller elements (2) and the smaller diameters of the conical roller elements (2) are associated with one another in the central region, **characterised in that** the roller elements (2) on a common centric axle shaft (3) by way of associated eccentric bushes (4, 5) connected to the axle shaft (3) on both sides rotatable to form a trough and an elevation have region associated within one another by rotation.

2. A draw roller according to Claim 1, **characterised in that** the roller elements are arranged with respect to the eccentric bushes (4, 5) in their end regions by way of interconnected ball bearings (8, 9), which eccentric bushes are connected to the shaft (3) and have bores (6, 7) arranged at an angle (alpha) in alignment with the axle shaft (3).

3. A draw roller according to Claim 1 or 2, **characterised in that** the inner sides of the eccentric bushes (4, 5) of the roller elements (2) are arranged at a spacing by means of a distance bush (16).

4. A draw roller according to one of Claims 1 to 3, that the inner regions of the associated roller elements (2) is arranged by way of a dome-shaped guide element (14) connected to a roller element (2) on the one hand for receiving the associated other roller element (2) on the other and optionally with the interconnection of a sealing element (15).

## Revendications

1. Cylindre d'étirage pour des matières fines en forme de bande et qui se présente sous la forme d'un cylindre d'étirage large, comme pour un traitement du textile et du papier, où un corps de cylindre (1), au cours de son mouvement de rotation, fait une trajectoire circulaire variable servant de surface d'appui pour une bande de matière et, à partir du milieu du cylindre, il se produit un passage d'une surface d'appui en forme de creux, à une surface d'appui en saillie, et le corps de cylindre (1) est formé par deux éléments de cylindre coniques (2) associés l'un à l'autre, de même les diamètres plus petits des éléments de cylindre coniques (2) sont associés l'un à l'autre au niveau de la zone centrale,
caractérisé en que les éléments de cylindre (2) en rotation sur un arbre primaire (3) central commun, via des coussinets d'excentrique (4, 5) reliés à l'arbre primaire (3) en étant associés des deux côtés, présentent, sous l'effet de la rotation, une zone associée servant à la formation d'une partie en creux et d'une partie en saillie s'imbriquant.

2. Cylindre d'étirage selon la revendication 1, **caractérisé en ce que** les éléments de cylindre (2), dans leurs zones d'extrémités, sont disposés en face des coussinets d'excentrique (4, 5) reliés à l'arbre (3), au moyen de roulements à billes intercalés (8, 9), où les coussinets d'excentrique présentent, en alignement sur l'arbre primaire (3), des perçages (6, 7) disposés dans l'angle (alpha).

3. Cylindre d'étirage selon la revendication 1 ou 2, **caractérisé en ce que** les côtés intérieurs des coussinets d'excentrique (4, 5) des éléments de cylindre (2) sont disposés en étant espacés par une douille d'écartement (16).

4. Cylindre d'étirage selon l'une quelconque des revendications 1 à 3, **caractérisé en ce que** les zones intérieures des éléments de cylindre associés (2) sont, d'une part, guidées par un élément de guidage (14), en forme de calotte, relié à un élément de cylindre (2), d'autre part disposées pour recevoir l'autre élément de cylindre associé (2) et, le cas échéant, avec l'interposition d'un joint d'étanchéité (15).
